Europäisches Patentamt

European Patent Office

Office européen des brevets

(11) Veröffentlichungsnummer: **0 096 170 B1**

# EUROPÄISCHE PATENTSCHRIFT

(45) Veröffentlichungstag der Patentschrift:
15.07.87

(51) Int. Cl.⁴: **A 01 K 63/04, C 02 F 3/30**

(21) Anmeldenummer: **83102489.8**

(22) Anmeldetag: **14.03.83**

(54) **Verfahren und Vorrichtung zur biologischen anaeroben Denitrifikation von Aquariumwasser.**

(30) Priorität: **16.06.82 AT 2325/82**

(43) Veröffentlichungstag der Anmeldung:
**21.12.83 Patentblatt 83/51**

(45) Bekanntmachung des Hinweises auf die Patenterteilung:
**15.07.87 Patentblatt 87/29**

(84) Benannte Vertragsstaaten:
**BE CH DE FR GB IT LI LU NL SE**

(56) Entgegenhaltungen:
**EP - A - 0 037 028
DE - A - 2 933 324
FR - A - 376 442
FR - A - 2 432 485
GB - A - 1 485 254**

(73) Patentinhaber: **sera- Aquaristik GmbH,
Max-Planck-Strasse 6, D-5138 Heinsberg (DE)**

(72) Erfinder: **Wachtel, Hellmuth, Dipl.-Ing, Dr., Speisinger
Strasse 220, A-1238 Wien (AT)**

(74) Vertreter: **Rauh, Wolfgang K., Dipl.-Ing. Patentanwalt,
Mittelstrasse 55, D-5100 Aachen (DE)**

## Beschreibung

Die Erfindung betrifft ein Verfahren und eine Vorrichtung zur biologischen, anaeroben Denitrifikation von Aquariumwasser mittels die Ansiedlung fakultativ-anaerober Mikroben begünstigenden Trägermaterials.

Ein besonderes Problem der Wasserhygiene im häuslichen Aquarium ist das Vorhandensein bzw. die Bildung von Nitraten. Infolge der allgemein unnatürlich hohen Fischdichte im Aquarium entsteht durch den Abbau stickstoffhaltiger organischer Verbindungen laufend eine Nitratmenge, die durch die Aufnahme durch Wasserpflanzen oder durch spontane bakterielle Denitrifikation im Becken im allgemeinen bei weitem nicht beseitigt werden kann. Daraus folgt, dass der Nitratanteil ständig bis zu einer Sättigungsgrenze ansteigen kann, die weit über der Zulässigkeitsgrenze liegt. Es ist daher erforderlich, in bestimmten Zeitabständen einen teilweisen Wasserwechsel vorzunehmen, was relativ umständlich ist und nicht immer eine vorteilhafte Verbesserung bringt.

Nicht selten weist nämlich heute schon das Leitungswasser so hohe Nitratwerte und erhöhte Gehalte an anderen schädlichen Stoffen, z.B. Schwermetallen, auf, dass es höchst vorteilhaft wäre, wenn auf den Wasserwechsel weitgehend verzichtet werden könnte. Besonders kritisch ist das Nitrat bei der Haltung vieler Meerestiere und auch dort, wo zwar ein relativ hoher Nitratwert noch vertragen wird, jedoch durch Störung des mikrobiellen Gleichgewichtes die Gefahr besteht, dass durch Reduktion des Nitrats unzulässig hohe Anteile des sehr giftigen Nitrits entstehen.

Das Nitrat wird überdies als Ursache der Cryptocorynenkrankheit sowie anderer, das Wachstum der Wasserpflanzen beeinträchtigender Krankheiten angesehen.

Es ist aus der industriellen Klärtechnik an sich bekannt, Wasser dadurch zu denitrifizieren, dass man es eine bestimmte Zeit der Einwirkung anaerober Mikroben aussetzt, die auf einem geeigneten Substrat angesiedelt sind. Derartige Verfahren werden in der Regel nur grosstechnisch ausgenutzt und erfordern sehr umfangreiche und teure Anlagen, wie Absetz- und Klärbecken, Filtertürme, Behälterbatterien und dgl. Darüber hinaus erfordern sie die Kontrolle durch geschultes Personal.

Zu diesen für grössere Wassermengen anwendbaren Verfahren gehören auch diejenigen nach der GB-A 1 485 254 und FR-A 2 432 485. Die GB-A 1 485 254 schlägt im Zusammenhang mit der Denitrifizierung von Wasser für die Fischzucht (Karpfenzucht) vor, das zu reinigende Wasser nacheinander einem Vorbehandlungsbehälter, einem Behälter mit bewegtem und belebtem Schlamm, dem ein Denitrifikationsbehälter parallel zugeschaltet ist, und einem Nachbehandlungsbehälter zuzuführen. Die umzuwälzende Wassermenge liegt bei etwa 600 l. Dieses bekannte Verfahren lässt sich nicht auf die Hausaquaristik übertragen, da dort die Verwendung von belebtem Schlamm aus Gründen der Schmutz- und Geruchsbelästigung, Hygiene, Schlammbeseitigungsproblemen und des Aufwandes an Hilfsgeräten und Energie für die ständige Bewegung des Schlammes sich von selbst verbietet.

Bei dem Verfahren nach der FR-A 2 432 485 soll das zu reinigende Wasser unter anaeroben Bedingungen durch ein mit heterotrophen Bakterien besetztes Filterbett aus gebrannter Tonerde geleitet werden, die 1–5%o Molybdän und ggf. weitere Schwermetalle enthalten soll.

Da ein ständiger Kreislauf eines auf diese Weise denitrifizierten Wassers eine zu grosse Konzentration an Molybdän bewirken würde, würde ein solches Verfahten in der Aquaristik nicht anwendbar sein. Man würde hier nur den einen Schadstoff gegen den anderen austauschen.

Während es bei Weichwasserbecken noch möglich sein kann, den Nitratgehalt statt durch Wasserwechsel durch eine teilweise Deionisierung mit Austauscherharzen zu senken, ist dieser Weg bei Aquarien mit See- oder Hartwasser nicht möglich.

Obgleich in der industriellen Abwassertechnik Verfahren zur biologischen Denitrifikation üblich sind, wobei Wasser unter weitgehend anaeroben Bedingungen längere Zeit mit den denitrifizierenden Mikroben in Berührung gebracht wird, die sich auf geeignetem Trägermaterial entwickeln, konnten derartige Verfahren in der Aquaristik, auch massstäblich verkleinert, nicht eingeführt werden.

In der Aquaristik liegt vor allem das Problem vor, relativ kleine Wassermengen wirksam zu denitrifizieren und zwar ohne das Erfordernis, eine grössere Wasserreinigungsanlage aufstellen zu müssen. Die Wasserbehandlung muss in einem der Aquariengrösse angepassten Rahmen erfolgen und gleichzeitig den im Aquarium lebenden Tieren und Pflanzen zuträglich sein. Aus diesem Grunde lassen sich grosstechnisch benutzte Verfahren nicht einfach in verkleinertem Massstab ausnutzen.

Aus den besonderen biologischen und chemischen Milieubedingungen, den Eigenarten und der Menge der Aquariumsbewohner und -pflanzen, der Grösse der Aquarien und der erforderlichen Genauigkeit der Zugabe von Energieträgern ergeben sich erhebliche Hindernisse, die eine einfache Übertragung grosstechnischer Verfahren in den verkleinerten Massstab verbieten. So kann beispielsweise die erforderliche laufende Zugabe von Energieträgern, z.B. Laktose, das Überhandnehmen schädlicher Mikroorganismen und das Auftreten von Fäulnisvorgängen herbeiführen. Hinzu kommt die Schwierigkeit, die erforderlichen Reaktionsstrecken bzw. -anlagen und -geräte in einer der Grösse der Aquarien angemessenen Weise vorzusehen.

Der Erfindung liegt die Aufgabe zugrunde, ein kontinuierlich anwendbares Denitrifikationsverfahren für Aquarienwasser zu schaffen, das wirtschaftlich unter anaeroben Bedingungen durchführbar ist. Anaerobe Bedingungen erfordern einen langen Kontaktweg zwischen Mikroben tragendem Trägermaterial und Wasser in einem geschlossenen Raum bei gleichzeitigem Sauerstoffabbau.

Die Lösung der gestellten Aufgabe ergibt sich erfindungsgemäss aus den kennzeichnenden Merkmalen des Anspruches 1.

Beim Durchlauf einer langen Einwirkstrecke ohne Zutritt von Luftsauerstoff erfährt das zu behandelnde, das Substrat durchziehende Wasser eine durch die Einwirkung der fakultativ-anaeroben Mikroben verursachte Sauerstoffverarmung. Während diese bestimmten Mikroben normalerweise atmosphärischen, im Wasser gelösten Sauerstoff aufnehmen, können sie bei zu geringer Sauerstoffkonzentration nach einer gewissen Anpasszeit ihr Enzymsystem so umschalten, dass sie den benötigten Sauerstoff dem im Wasser gelösten Nitrat entziehen und das Wasser auf diese Weise denitrifizieren. Um die anaeroben Bedingungen herbeizuführen sieht das erfindungsgemässe Verfahren eine unter Luftabschluss stehende, relativ lange Einwirkstrecke vor. Zur weiteren Durchführung des Verfahrens ist noch die Zugabe eines zusätzlichen Energieträgers, z.B. Kohlehydrat erforderlich. Die fakultativ-anaeroben Mikroben, die unter anaeroben Bedingungen leben müssen, sind dann in der Lage, mittels Wasserstoff Nitrat zu spalten und einen Teil des im Nitratmolekül enthaltenen Sauerstoffs zu «atmen», indem sie mit dem Wasserstoff und dem restlichen Sauerstoff Wasser bilden. Man bezeichnet diesen Vorgang auch als «Nitratatmung». Es ergibt sich dabei ein weitgehend nitratfreies Wasser.

Als geeignete Vorrichtung zur Durchführung des erfindungsgemässen Verfahrens wurde eine solche gefunden, die durch die Merkmale des Anspruches 2 gekennzeichnet ist.

Die Längsschnittform eines solchen Behälters ist zwar an sich aus der GB-A 935 909 bekannt, die sich jedoch auf eine grosstechnische Filtereinrichtung bezieht. Hierbei ist ein offener Sedimentationsbehälter vorgesehen, in dem sich lediglich Festkörperteilchen absetzen sollen, die in einer durch ein Festkörperteilchenfilter gespülten Flüssigkeit enthalten sein können. Für die erfindungsgemäss vorgesehenen Zwecke ist eine solche Behälterform jedoch nicht vorbeschrieben.

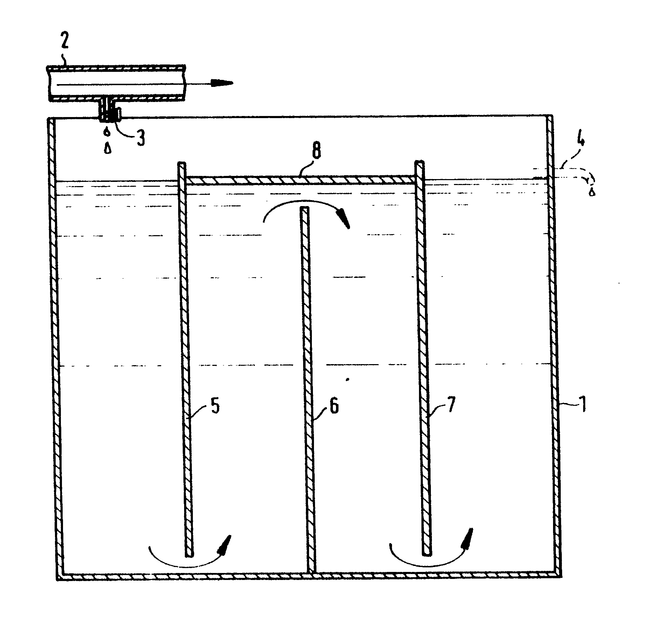

Nachstehend ist die erfindungsgemässe Vorrichtung anhand eines in der Zeichnung dargestellten Ausführungsbeispieles näher erläutert.

Die Zeichnung zeigt einen Behälter 1, der durch eine Vielzahl lotrechter Trennwände 5, 6, 7 in mehrere Kammern unterteilt ist. Die Trennwände 5, 6 und 7 enden jeweils abwechselnd mit Abstand oberhalb des Behälterbodens oder unterhalb des Behälterfüllniveaus, so dass ein schleifenförmiger bzw. mäanderförmiger Strömungskanal gebildet ist.

Der Behälter 1 ist mit einem Substrat aus Trägermaterial für die Ansiedlung denitrifizierender, fakultativ-anaerober Mikroben und Wasser gefüllt. Das Trägermaterial kann aus Schaumstoffflocken, Gesteinsgrus, Splitt, Blähton oder dgl. neutralen Stoffen bestehen. Oberhalb der ersten Kammer befindet sich ein Zulaufrohr 2 für zu behandelndes Aquarienwasser, und ein Zulaufhahn 3. Die letzte Kammer weist einen Überlauf 4 für bereits behandeltes Wasser auf. Ferner ist ein wesentlicher Teil des Behälters 1 durch eine hier abnehmbare Abdeckung 8 gegen den Zutritt von Luftsauerstoff abgeschlossen, so dass die denitrifizierenden Mikroben rasch und verstärkt auf das zu behandelnde Wasser einwirken können. Dieses ist dabei gezwungen, in dem relativ kleinen Behälter 1 eine relativ lange Einwirkungsstrecke entlang dem schleifenförmigen Strömungskanal durch das im wesentlichen feststehende Substratbett zu durchlaufen und ist daher während einer ausreichend langen Verweilzeit der Einwirkung der Mikroben voll ausgesetzt.

Diese verbrauchen zunächst den im Wasser gelöst enthaltenen Sauerstoff. Da dieser laufend, unterstützt durch die Kammerabdeckung 8 abnimmt, schalten die Mikroben sehr bald auf die «Nitratatmung» um, d.h. sie beginnen, von dem im Wasser gelösten Nitrat den Sauerstoff abzuspalten und dieses so zu reduzieren. Hierzu ist die Zufuhr von Energieträgern, d.h. eines Wasserstoffdonators, in geeigneter Menge erforderlich, z.B. Kohlehydrate, wie Laktose. Solche Energieträger werden mittels einer nicht dargestellten Einrichtung z.B. einem Dosiergerät, wie einem Aquariumfutterautomaten, bei Verwendung von Energieträgern als Feststoff, oder einer Tropfeinrichtung, wie bei 3 dargestellt, dosiert in die erste Kammer eingeführt.

Das zu behandelnde Wasser wird in solcher Menge zugeführt, dass es sich zur völligen Denitrifikation ausreichend lange in der Vorrichtung befindet. Diese ist ohne grossen Aufwand aufstellbar und kann ohne weitere Fachkenntnis betrieben werden.

Für ein 200-l-Aquarium ergab sich empirisch bei einem Durchfluss von 5–20 l/Tag eine Energieträgerzugabe in der Grössenordnung von 0,5–2 g/Tag.

## Patentansprüche

1. Verfahren zur biologischen, anaeroben Denitrifikation von Aquariumwasser mittels die Ansiedlung fakultativ-anaerober Mikroben begünstigenden Trägermaterials, dadurch gekennzeichnet, dass zu denitrifizierendes, sauerstoffhaltiges Wasser in gesteuerter Strömungsgeschwindigkeit über eine lange, weitgehend unter Luftsauerstoffabschluss stehende, schleifenförmig abwechselnd abwärts und aufwärts gehende Einwirkstrecke geführt wird, die aus einem mit denitrifizierenden, fakultativ-anaeroben Mikroben besetzten Substrat aus Trägermaterial, wie Schaumstoffflocken, Gesteinsgrus, Splitt, Blähton oder dgl. und Wasser besteht und länger ist, als zum Verbrauch des im Wasser gelöst enthaltenen Sauerstoffes nötig ist, und dass dem Substrat gleichzeitig in gesteuerter Menge für die Mikrobentätigkeit geeignete Energieträger als Wasserstoffdonator, z.B. leicht lösliche Kohlehydrate, wie Laktose oder dgl. zugeführt werden.

2. Vorrichtung zur Durchführung des Verfahrens nach Anspruch 1, mit einem Behälter und darin angeordneten lotrechten Trennwänden, dadurch gekennzeichnet, dass der mit zu denitrifizierendem, sauerstoffhaltigem Wasser und Trägermaterial gefüllte Behälter (1) durch mehrere abwechselnd mit Abstand oberhalb des Behälterbodens und mit Abstand unterhalb des Behälterfüllniveaus endenden Trennwände (5, 6, 7) in Kammern unterteilt ist, die einen im Längsschnitt schleifenförmigen, abwechselnd aufwärts und abwärts gehenden Strömungskanal bilden, dass der ersten Kammer oben ein steuerbarer Zulauf (2, 3) für zu behandelndes Wasser sowie eine Einrichtung zum dosierten Zugeben eines Wasserstoffdonators zugeordnet ist und dass die letzte Kammer in Behälterfüllniveauhöhe einen Überlauf (4) für behandeltes Wasser besitzt, wobei die dazwischenliegenden Kammern in Höhe des Behälterfüllniveaus eine vorzugsweise abnehmbare Abdeckung (8) aufweisen.

3. Vorrichtung nach Anspruch 2, dadurch gekennzeichnet, dass als Einrichtung zum dosierten Zugeben des gelösten Wasserstoffdonators eine Tropfeinrichtung (3) vorgesehen ist.

4. Vorrichtung nach Anspruch 2, dadurch gekennzeichnet, dass als Einrichtung zum dosierten Zugeben des Wasserstoffdonators in fester Form ein Dosiergerät, z.B. ein Aquarienfütterautomat, vorgesehen ist.

## Claims

1. Method for biologically anaerobically denitrifying aquarium water with a support material capable to promote the settlement of facultatively anaerobic microbes, characterized in that the oxigen-containing water to bedenitrified is passed with a controlled velocity of flow along a long, convolutely up and down extending reaction path which substantially is excluded from atmospheric oxygen, which reaction path consists of a substrate of a support material, as foam material flakes, fine gravel, stone chips, bloated clay or the like, and water, and is occupied by denitrifying, facultatively anaerobic microbes, and is longer than necessary for consuming the oxigen dissolved in the water and that, coincidentally, in order to support the action of said microbes there is a controlled dosage of energy carrier materials working as hydrogen donators, e.g. readily soluble carbohydrates as lactose or the like.

2. An apparatus for realizing the method of claim 1, with a tank containing vertical wall partitions, characterized in that the tank (1) filled with oxigen-containing water to be denitrified, and a support material, is devided into chambers by several wall partitions (5, 6, 7) which alternately terminate in spaced relation from the bottom or beneath the filling level of the tank, respectively, which chambers, in a longitudinal section, form a convolute up and down extending flow path, that a dosage means for admitting a hydrogen donator and a means for the controlled inlet (2, 3) of water to be treated are associated to the top of the first chamber and that the last chamber has an overflow (4) for treated water at the filling level of the tank and the intermediate chambers have a preferably detachable cover means (8) at the filling level.

3. Apparatus of claim 2, characterized in that the dosage means for a dissolved hydrogen donator is a drip arrangement (3).

4. Apparatus of claim 2, characterized in that the dosage means for hydrogen donator in solid form is a dosage apparatus e.g. an aquarium fodder automate.

## Revendications

1. Procédé de dénitrification biologique anaérobic de l'eau d'un aquarium au moyen d'un substrat favorisant la fixation de microbes facultativement anaérobies, caractérisé en ce que, pour réaliser la dénitrification, l'eau contenant de l'oxygène est contrainte d'effectuer, à une vitesse d'écoulement réglable, un parcours relativement long et largement à l'abri de l'air atmosphérique, présentant de manière alternée des méandres ou chicanes vers le bas et vers le haut, lequel comporte un substrat de mousse alvéolaire, de gravier, de gravillons, d'argile expansée ou autre matière similaire peuplé de microbes dénitrifiants facultativement anaérobies et de l'eau, et est plus long que normalement requis pour assurer la consommation de l'oxygène dissous dans l'eau, et en ce que le substrat est alimenté simultanément, suivant une quantité réglable, en substrat énergétique approprié à l'activité des microbes, par exemple un donneur d'hydrogène du type hydrate de carbone ou glucide tel que le lactose ou autre substance similaire légèrement soluble dans l'eau.

2. Dispositif permettant la mise en œuvre du procédé suivant la revendication 1, comportant un bac et des parois de séparation verticales internes, caractérisé en ce que le bac (1), rempli d'eau à dénitrifier contenant de l'oxygène et d'un substrat destiné à la fixation de microbes dénitrifiants, est divisé en chambres au moyen d'une série de parois de séparation (5, 6, 7) se terminant de manière alternée à une certaine distance du fond du bac ou au-dessous du niveau plein du bac, de manière à former un canal d'écoulement dans le sens longitudinal du dispositif, présentant des chicanes ou des méandres dirigeant l'eau alternativement vers le bas et vers le haut, en ce que la première chambre est pourvue, à sa partie supérieure, d'un système réglable (2, 3) d'amenée d'eau à traiter ainsi que d'un dispositif permettant l'apport d'un donneur d'hydrogène suivant des quantités réglables, en ce que la dernière chambre possède un trop-plein (4) à hauteur du niveau supérieur du bac, destiné à l'évacuation de l'eau déjà traitée et en ce que les chambres intermédiaires sont pourvues d'un couvercle (8) de préférence amovible à hauteur du niveau plein du bac.

3. Dispositif suivant la revendication 2, caractérisé en ce qu'il est prévu un système d'écoulement goutte à goutte (3) en tant que système d'apport dosé du donneur d'hydrogène liquide.

4. Dispositif suivant la revendication 2, caractérisé en ce qu'il est prévu un doseur, par exemple un dispositif automatique d'apport de nourriture pour poissons, en tant que système d'apport dosé du donneur d'hydrogène, lorsqu'il se présente sous la forme solide.